# EUROPÄISCHE PATENTANMELDUNG

(11) **EP 0 753 363 A1**
(43) Veröffentlichungstag der Anmeldung: **15.01.1997**
(21) Anmeldenummer: 95110860.4
(22) Anmeldetag: 12.07.1995
(51) Int. Cl.: B21D 26/02

(54) **Verfahren zur Herstellung von Hohlkörpern**

(71) Anmelder: Erhardt Bischoff GmbH & Co KG, D-73655 Plüderhausen (DE)
(72) Erfinder: Günther, Ulrich, D-79430 Ittlingen (DE)
(74) Vertreter: Patentanwälte Ruff, Beier, Schöndorf und Mütschele

(57) **Zusammenfassung**

Ein Verfahren zum Herstellen eines eine Öffnung (7) aufweisenden Hohlkörpers (11) schlägt vor, zunächst zwei flache vorzugsweise ebene Bleche (1,2) so zu verformen, daß jedes Blech eine habltrichterartige Vertiefung (3) aufweist. Anschließend werden die Bleche so aufeinandergelegt, daß die Vertiefungen deckungsgleich eine zwischen die Bleche führende trichterartige Öffnung bilden. Die beiden Bleche werden längs mindestens einer Umfanglinie (5), die beidseits der Öffnungen beginnt, miteinader verschweißt. Durch Einbringen von Hochdruck in das Innere verformen sich die innerhalb der Umfanglinie liegenden Bereiche der beiden Bleche aus der Ebene der Bleche heraus, so daß dadurch ein Hohlkörper (9) entsteht. Die überstehenden Blechteile können anschließend durch Stanzen beseitigt werden.

## Beschreibung

Die Erfindung geht aus von einem Verfahren zur Herstellung eines mindestens eine Öffnung aufweisenden Hohlkörpers durch ein Innenhochdruckverfahren.

Es ist bekannt, Rohre hydrostatisch in kompliziertere Formen umzuformen. Dies hat den Vorteil, daß die kompliziertere Form des Rohrs immer noch einstückig ohne Nähte hergestellt wird.

Die hydrostatische Umformung von Rohren hat jedoch ihre Grenzen, da das Material nicht in beliebige Formen nachfließen kann.

Im Automobilbau, insbesondere bei Abgaskrümmern von Verbrennungsmotoren, sind häufig komplizierte Hohlkörperformen erforderlich, die üblicherweise aus mehreren durch Tiefziehen hergestellten Teilschalen zusammengesetzt werden. Dies bedeutet einen erhöhten Fertigungsaufwand.

Der Erfindung liegt die Aufgabe zugrunde, ein Verfahren zur Herstellung von mindestens eine Öffnung aufweisenden Hohlkörpern zu schaffen, mit dem es mit geringem Aufwand möglich wird, in wirtschaftlicher Weise auch komplizierte Formen herzustellen.

Zur Lösung dieser Aufgabe schlägt die Erfindung ein Verfahren mit den Merkmalen des Anspruchs 1 vor. Weiterbildungen der Erfindung sind Gegenstand von Unteransprüchen.

Nach der Erfindung geht man also von zwei im Normalfall ebenen Blechen aus, die insbesondere gleiche Abmessungen aufweisen. In eines der Bleche wird eine muldenartige Vertiefung im Randbereich eingebracht, an einer Stelle, die später entweder die Öffnung des Hohlkörpers bilden soll oder zu der Öffnung führen soll. Nach dem Zusammenlegen der beiden Bleche wird dann die Verschweißung längs einer Umfangslinie durchgeführt, die später eine Kontur des herzustellenden Hohlkörpers bildet. Auf diese Zusammensetzung zweier flächiger aneinander anliegender Bleche wird dann, ausgehend von der halbtrichter- oder trichterartigen Öffnung, eine hydrostatische Umformung angewendet. Dabei verformt sich dann das Material der beiden Bleche innerhalb der Umfangslinie, so daß das Fließen des Materials nicht mehr in Längsrichtung des herzustellenden Hohlraums, sondern hauptsächlich quer dazu erfolgt. Auf diese Weise lassen sich Hohlkörper, insbesondere auch Rohre mit Abzweigungen, mit den kompliziertesten Formen herstellen.

Während es ausreichen kann, nur eins der beiden Bleche mit der muldenartigen Vertiefung zu versehen, kann erfindungsgemäß in Weiterbildung vorgesehen sein, beide Bleche mit einer derartigen Vertiefung zu versehen, die dann beim spiegelverkehrten Aufeinanderlegen der Bleche sich zu einem Trichter ergänzen. Dabei muß keine echte Trichterform verwendet werden. Es reicht aus, daß eine Öffnung entsteht, die in den Raum zwischen den beiden Blechen führt.

Das Entfernen der überstehenden Teile außerhalb der verschweißten Umfangslinie kann vor der Verformung durchgeführt werden. Insbesondere wird jedoch von der Erfindung vorgeschlagen, das Entfernen der überstehenden Teile durch Stanzen oder Sägen nach der Verformung durchzuführen.

Sollen Hohlkörper mit mehr als einer Öffnung, also beispielsweise rohrartige Teile, hergestellt werden, so kann erfindungsgemäß vorgesehen sein, daß zwei muldenartige Vertiefungen an den entsprechenden Stellen in dem mindestens einen Blech hergestellt werden, gegebenenfalls auch wieder in beiden Blechen. In diesem Fall wird dann Hochdruck an beiden Öffnungen angelegt.

Ebenfalls möglich ist es, auch in diesem Fall nur eine Öffnung zu verwenden und die zweite Öffnung dann durch Absägen eines Teils des Hohlkörpers zu öffnen.

In den meisten Fällen kann man nach der Erfindung von zwei ebenen Blechen ausgehen, insbesondere dann, wenn ein Hohlkörper hergestellt werden soll, der zu einer Ebene symmetrisch ist.

Es ist jedoch ebenfalls möglich und wird von der Erfindung vorgeschlagen, daß man bei in sich gekrümmten Hohlkörpern von zwei übereinstimmend in einer Richtung gebogenen Blechen ausgehen kann. So ist es beispielsweise möglich, zwei gebogene Bleche zu verwenden, die im einen Schnitt gekrümmt und im anderen geradlinig sind.

Es gibt gerade bei abgasführenden Teilen häufig den Fall, daß zwei zueinander bezüglich einer Ebene symmetrische Teile hergestellt werden müssen. Hier schlägt nun die Erfindung vor, beide Teile gemeinsam dadurch herzustellen, daß ein beide Teile enthaltender Hohlkörper nach dem Verfahren hergestellt und nach Herstellung dieses gemeinsamen Hohlkörpers eine Trennung beispielsweise längs der Symmetrie-Ebene durch Absägen erfolgt. Dieses Verfahren ist insbesondere dann von Vorteil, wenn Rohre mit mehreren Abzweigungen hergestellt werden, da die Abzweigungen des einen Teils dann in die Abzweigung des anderen Teils ineinander übergehen und auf diese Weise auch recht lange Abzweigungen herstellen lassen.

Dieses Verfahren ist aber nicht nur bei symmetrischen Hohlkörpern anwendbar, sondern allgemeiner bei Hohlkörpern, die eine gemeinsame Schnittebene aufweisen. Auch wenn die Schnittebene etwas verschieden ist, so kann man das Verfahren anwenden, sofern man eine gewisse Nachbearbeitung in Kauf nimmt.

Erfindungsgemäß kann vorgesehen sein, daß die Bleche längs mehrerer Umfangslinien miteinander verschweißt werden. Es kann sich dabei auch um geschlossene Umfangslinien handeln, was insbesondere zur Herstellung von Abzweigungen erforderlich sein kann.

Erfindungsgemäß kann ein Schweißverfahren verwendet werden, das sich mit der erforderlichen Genauigkeit durchführen läßt. Hierfür kommt ein Elektronenschweißverfahren, ein Schutzgasschweißverfahren oder ein Widerstandsschweißverfahren in Frage. Besonders bevorzugt von der Erfindung wird jedoch ein Verschweißen mit Hilfe eines Lasers.

Das von der Erfindung vorgeschlagene Verfahren ist besonders geeignet zur Herstellung von gekrümmten Rohrleitungen mit Abzweigungen. Gerade die Abzweigungen, die beispielsweise quer zu einer Längsrichtung der Rohrleitung führen, lassen sich nach dem erfindungsgemäßen Verfahren besonders einfach und auch in entsprechend großer Menge herstellen.

Die Erfindung betrifft ebenfalls einen Hohlkörper, der sich durch die Maßnahmen nach dem Verfahren herstellen läßt.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig.1: zwei ebene Ausgangsbleche zur Herstellung zweier Rohrkrümmer;
- Fig. 2: in vergrößertem Maßstab einen Schnitt durch die beiden Bleche in lagerichtiger Darstellung;
- Fig. 3: die zusammengelegten Bleche nach Durchführung der Verschweißung;
- Fig. 4: die beiden Bleche nach Durchführung der Hochdruckinnenverformung;
- Fig. 5: den fertiggestellten Hohlkörper nach Entfernen der überstehenden Teile der Ausgangsbleche; und
- Fig. 6: die beiden aus dem Hohlkörper der Fig. 5 hergestellten endgültigen Krümmer.

Mit dem Verfahren, das anhand der Zeichnungen beschrieben wird, soll ein rohrförmiger Hohlkörper mit einer Längsrichtung und drei quer verlaufenden Abzweigungen hergestellt werden. Das Endprodukt ist in Fig. 6 dargestellt.

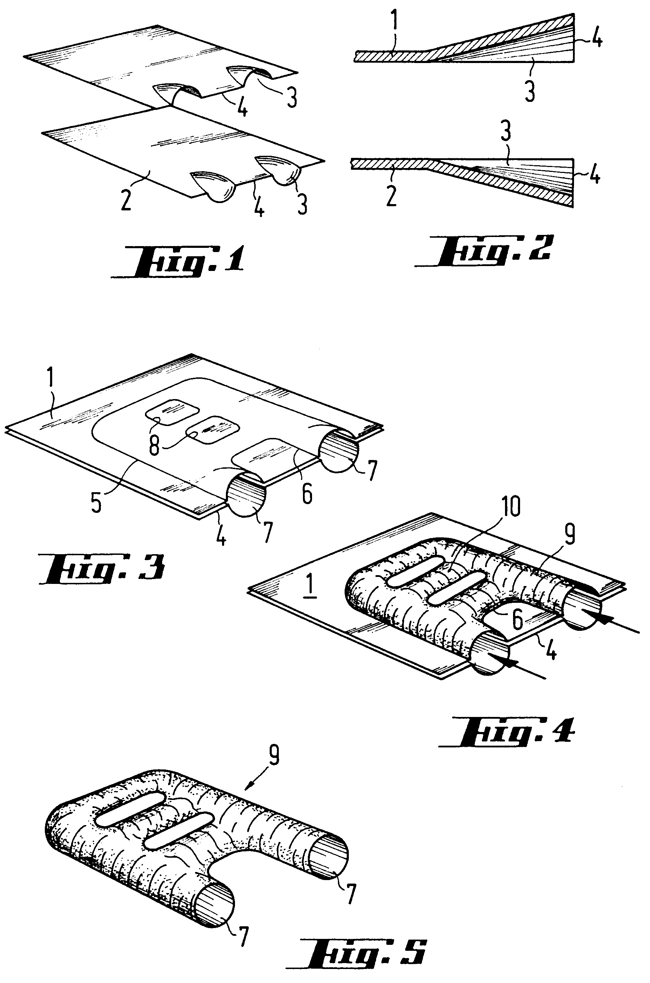

Um zu diesem Endprodukt zu gelangen, geht man erfindungsgemäß von zwei ebenen gleich großen rechteckigen Blechen 1, 2 aus, die in Fig. 1 dargestellt sind. Zunächst werden in das eine Blech 1 zwei trichterartige muldenförmige Vertiefungen 3 eingeformt, die sich bis zur Randkante 4 des Blechs 1 erweitern. Dadurch entstehen in der Randkante 4 zwei etwa halbkreisförmige Ausbuchtungen, siehe Fig. 1. Anschließend werden in das Blech 2 an der gleichen Stelle wie im Blech 1 zwei identisch bzw. spiegelsymmetrisch ausgebildete Vertiefungen 3 eingebracht, die sich ebenfalls in Richtung der Randkante 4 verbreitern.

Fig. 2 zeigt einen Schnitt durch die beiden Bleche an der Stelle der Vertiefungen 3. Die beiden Bleche werden dann deckungsgleich aufeinander gelegt, so daß die beiden Paare von Vertiefungen sich zu zwei trichterartigen Gebilden ergänzen, mit einer kreisrunden Öffnung im Bereich der Randkanten 4.

Auf die beiden so zusammengelegten Bleche 1, 2 wird dann ein Schweißverfahren ausgeübt, insbesondere ein Laserschweißverfahren, bei dem zunächst längs einer Umfangslinie 5 eine Verschweißung der beiden Bleche durchgeführt wird. Die Umfangslinie 5 wird so geführt, daß sie der späteren Außenkontur des aus beiden Kümmern zusammengesetzten Hohlkörpers entspricht. Sie führt von der Randkante 4 beider Bleche direkt neben der durch die trichterförmigen Mulden gebildeten Öffnung bis zu der gegenüberliegenden Seite der anderen Öffnung. Eine derartige Schweißung läßt sich mit Hilfe eines Lasers sehr einfach durchführen. Anschließend wird eine zweite Schweißung längs einer zweiten Umfangslinie 6 durchgeführt, die ebenfalls von den Randkanten 4 der beiden Bleche ausgeht, und zwar unmittelbar neben der jeweils gegenüberliegenden Seite der beiden Öffnungen 7.

Dann werden zwei Schweißungen längs zweier geschlossener Umfangslinien 8 durchgeführt.

Auf diese Weise ist ein Blechgebilde entstanden, bei dem die beiden Öffnungen 7 zwischen die Bleche innerhalb der beiden Umfangslinien 5, 6 führen. Bestimmte Bereiche sind durch die Umfangslinien 8 aus diesem Bereich ausgenommen.

Nun wird in beide Öffnungen 7 ein hydrostatischer Druck eingebracht, wobei Einzelheiten hier nicht dargestellt sind, da sie an sich bekannt sind. Die zwischen den Schweißlinien liegenden Bereiche des Blechs, zwischen die der Hochdruck eindringt, verformen sich dann, indem sie aus der Ebene der beiden Bleche 1, 2 nach oben bzw. unten ausweichend sich verformen. Es entsteht das in Fig. 4 dargestellte Gebilde, nämlich ein Hohlkörper 9, der etwa die Form eines U aufweist, dessen Schenkel durch zwei Querröhren 10 miteinander verbunden sind.

Anschließend wird der außen über der Schweißlinie bzw. der Umfangslinie 5 überstehende Bereich der beiden Bleche 1, 2 weggestanzt. Gleichzeitig kann auch der Bereich der Bleche zwischen der Randkante 4 und der Umfangslinie 6 ausgestanzt werden.

Die von den Hohlräumen gesehen außerhalb der Umfangslinie 8 liegenden Bereiche können ebenfalls zu diesem Zeitpunkt oder einem späteren Zeitpunkt entfernt werden.

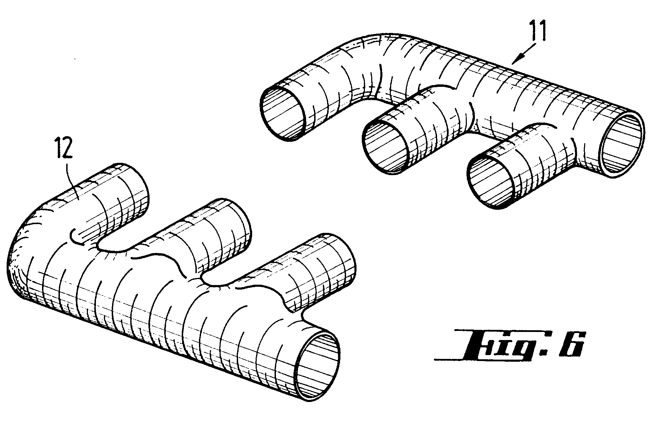

Der nun entstandene in Fig. 5 dargestellte Hohlkörper 9 ist nun im dargestellten Beispiel noch nicht das gewünschte Endergebnis. Um die beiden Krümmer 11 zu erhalten, die in Fig. 6 dargestellt sind, muß der Hohlkörper 9 der Fig. 5 noch längs der Mittelebene zersägt werden. Gegebenenfalls können auch die zu den Öffnungen 7 führenden Stutzen noch bearbeitet werden. Im Endergebnis sind zwei Krümmer 11 hergestellt worden, die in Fig. 6 dargestellt sind. Die Querrohre 10 der Fig. 4 sind durch das Auftrennen zu Abbiegungen 12 geworden, die etwa rechtwinklig zu der Längsachse der Rohrteile verlaufen.

Wie man aus einem Vergleich der Fig. 4 mit der Fig. 6 entnehmen kann, ist es nach diesem Verfahren möglich, die Abbiegungen 12 der Krümmer 11 in ausreichend großer Länge herzustellen, da das Blech bei der Hochdruckverformung im wesentlichen nur quer zur Richtung der Ebene der Bleche 1, 2 fließt.

Während bei der dargestellten Ausführungsform als Zwischenprodukt ein Hohlkörper 9 mit zwei Öffnungen hergestellt wurde, ist auch eine Herstellung mit nur einer Öffnung möglich, wenn eine solche Form gewünscht wird. Das Endprodukt, das durch Zersägen des Zwischenprodukts entsteht, hat, wie bereits erwähnt, insgesamt vier Öffnungen.

Anstelle der Verwendung von muldenartigen Vertiefungen 3 in beiden Blechen 1, 2 wäre es auch möglich, beispielsweise nur in einem der beiden Bleche Vertiefungen anzubringen.

Es sind mit dem dargestellten und beschriebenen Verfahren auch andere noch kompliziertere Formen herstellbar.

## Patentansprüche

1. Verfahren zum Herstellen eines eine Öffnung (7) aufweisenden Hohlkörpers (9, 11) durch Innenhochdruckverformen, bei dem
1.1 mindestens ein Blech (1, 2) im Bereich einer Randkante (4) mit einer sich zu der Randkante (4) öffnenden muldenartigen Verformung (3) versehen wird,
1.2 ein zweites Blech (2, 1) im wesentlichen deckungsgleich auf das erste Blech (1, 2) flächig derart aufgelegt wird, daß die muldenartige Vertiefung (3) einen Trichter mit einer Öffnung (7) im Bereich der Randkante (4) beider Bleche (1, 2) bildet,
1.3 die beiden Bleche (1, 2) längs mindestens einer beidseits an die Öffnung (7) in der Randkante (4) reichenden Umfangslinie (5, 6) miteinander verschweißt werden,
1.4 in die Trichteröffnungen (7) Hochdruck eingebracht und
1.5 die Bleche (1, 2) zur Bildung des Hohlkörpers (9, 11) verformt werden, und
1.6 die außerhalb der Umfangslinie (5, 6, 8) angeordneten Teile der Bleche (1, 2) entfernt werden.

2. Verfahren nach Anspruch 1, bei dem die beiden Bleche (1, 2) mit je einer muldenartigen Vertiefung (3) versehen und derart übereinander gelegt werden, daß sich die Vertiefungen (3) zu einem Trichter ergänzen.

3. Verfahren nach Anspruch 1 oder 2, bei dem die überstehenden Teile der Bleche (1, 2) nach dem Verformen entfernt werden, vorzugsweise durch Stanzen.

4. Verfahren nach einem der vorhergehenden Ansprüche, bei dem zur Herstellung von Hohlkörpern (9) mit zwei Öffnungen (7) in das mindestens eine Blech (1, 2) zwei Vertiefungen (3) eingeformt werden und der Hochdruck in beide dadurch gebildete Öffnungen (7) eingebracht wird.

5. Verfahren nach einem der vorhergehenden Ansprüche, bei dem zur Herstellung eines zu einer Ebene symmetrischen Hohlkörpers zwei ebene Bleche (1, 2) verwendet werden.

6. Verfahren nach einem der vorhergehenden Ansprüche, bei dem zwei Hohlkörper (11) mit einer gemeinsamen Schnittebene gleichzeitig durch Verformen zweier Bleche (1, 2) als zusammenhängender Hohlkörper (9) hergestellt und anschließend durch Trennen längs ihrer Schnittebene fertiggestellt werden.

7. Verfahren nach einem der vorhergehenden Ansprüche, bei dem die Bleche (1, 2) längs mehrerer Umfangslinien (5, 6, 8) miteinander verschweißt werden.

8. Verfahren nach einem der vorhergehenden Ansprüche, bei dem die Bleche (1, 2) mit einem Laser verschweißt werden.

9. Verfahren nach einem der vorhergehenden Ansprüche, zur Herstellung von gekrümmten Rohrteilen mit Abzweigungen.

10. Hohlkörper (9, 11) mit mindestens einer Öffnung (7), herstellbar durch ein Verfahren nach einem der vorhergehenden Ansprüche.
